# EUROPEAN PATENT SPECIFICATION

(11) **EP 2 080 490 B1**
(45) Date of publication and mention of the grant of the patent: **18.11.2015**
(21) Application number: 06847241.4
(22) Date of filing: 31.10.2006
(51) Int. Cl.: A61C 7/12, A61C 7/14

(54) **BRACKETS AND METHOD FOR TEETH ALIGNMENT WITH WOVEN WIRE**
SPANGEN UND VERFAHREN ZUR AUSRICHTUNG VON ZÄHNEN MIT GEWEBTEM DRAHT
BRACKETS ET PROCÉDÉ D'ALIGNEMENT INTERDENTAIRE À L'AIDE DE FIL DE FER TISSÉ

(43) Date of publication of application: 22.07.2009
(73) Proprietor: Negret Cordoba, Marcel, Bogota D.C. 22222 (CO); Rojas Pardini, Pablo, 2664 Ciudad De Panama (PA)
(72) Inventor: ROJAS PARDINI, Pablo, 2664 Ciudad De Panama (PA)
(74) Representative: Temino Ceniceros, Ignacio
(86) International application number: PCT/IB2006/003826
(87) International publication number: WO 2008/053269

(56) References cited:
- EP-A2- 1 151 727
- US-A- 2 230 315
- US-A- 2 756 502
- US-A- 3 091 856
- US-A- 3 660 900
- US-A- 4 669 980
- US-A- 4 793 804
- US-A- 4 880 380
- US-A- 5 039 303
- US-A- 5 044 945
- US-A- 5 242 299
- US-A- 5 269 681
- US-A- 5 362 233
- US-A- 5 791 897
- US-A1- 2003 203 333

## Description

### TECHNOLOGICAL AREA

The present patent request refers to a bracket and wire threading alignment procedure to be used in the orthodontic treatment.

### PRIOR ART

The orthodontic conventional techniques with fixed appliances fix the brackets on the frontal side of all the teeth (labial side or lip side) for the teeth in good position as well as for the teeth in bad position (crowded).

The other technique (fixed technique) is the lingual (on the back part of all the teeth or on the tongue side) where the brackets are fixed on the back of all the teeth that are in good position as well as on the teeth in bad position. Both techniques apply pressure over the crowded tooth or in bad position in order to move it, without creating first the necessary space to move or align the tooth in bad position. With both techniques pressure is applied without having the necessary spaces tire discomforts are more evident if first we do not open the spaces en both sides of the crowded tooth, overlapped or in bad position.

It is important to remember that pressure over the teeth is a mechanism that causes the reabsorbtion of the alveolar bone. With other mechanisms, in some cases of moderate crowding, the dental extractions are needed in order to gain spaces.

Nevertheless, the decision of extracting may increase the risk factors and limitations during the orthodontic procedure, specially in anterior crossed bites with anterior crowding and deep profiles (pseudos class III), severe deep bites with anterior and lower posterior crowding in patients with concave or deep profiles (class II. Div II), also in patients with moderate crowding and with temporo-mandibular articulation limitations, in addition to other clinical conditions.

The US 5.039.303 patent named "Orthodontic Process" belonging to Jere Irwing dated en August 31, 1991, refers to the use of the dental floss in an 8-form between the teeth or group of teeth where pressure is exerted over the teeth with an 8-form tied one with another with a dental floss. In this patent the dental floss enters from the dental surface with direction to the gum sliding between one tooth and another in order to enter through the contact point; the dental floss may reach the gum causing infectious-contagious diseases. In addition, a dental floss does not have the resilience, that is to say, the ability of a material to change its form temporarily without deforming nor has a definite form. This differs from the present patent request where a resilient wire is eyeleted under the contact point and over the gum between one tooth and another (interdental papilla).

In the patent US 4.880.380 named "Orthodonture appliance which may be manually installed and removed by the patient" registered by Martin G. Martz on November 14, 1989, the placing of manual hooks on the superior part of the teeth is described in order to protect the manual technique using clasps over the bite plane interfering with it. It is also tied with two wires without the properties (they are not resilient) needed to obtain the effect achieved with the procedure of the present patent; in addition, it does not passes, between one tooth to another and does not forms an eyeleting. The patent of our requester tries to protect the procedure by means of a technique where a nitinol wire (resilient wire that has and maintains the dental arch or horseshoe form) allows to exert a constant tension according to the procedure described for the opening of the space in combination with invention appliance (Bracket), only on the teeth in bad position and on the opposite side of the conventional technique being used.

Patent 4,880,380, when using clasps, interferes with the bite and does not pass underneath the contact point.

US 5,269,681 discloses brackets for teeth alignment with woven wire as defined in the preamble of claim 1.

### OBJECT OF THE INVENTION

The main purpose of the patent request is to present a Bracket and the interdental wire threading alignment procedure, which is placed on the opposite side of the technique being used where the wire will try to pull the Bracket to the opposite side creating the auto retention due to the opposite position and to the rounded surface of the slots where they make contact with the wire.

### ADVANTAGES OF THE INVENTION

With relation to the prior art, the patent request for the invention of the Bracket and the Interdental wire threading alignment procedures, presents the following advantages:
- The Bracket has two slots on the sides in an inverted "L" shape, which facilitates the auto retention and adaptation of the wire in order to compensate the height of the wire threading.
- The wire in the Bracket of the invention, when placed on the opposite side of the technique being used, will try to pull the Bracket due to the opposite position and to the rounded surface of the slots where they make contact with the wire, reducing the friction.
- The Bracket is placed on the tooth in bad position on the opposite side of any of the conventional techniques.
- The two slots in an inverted "L" shape plus the auxiliary notches of the Bracket help to intrude or extruded and also to compensate the height of the wire threading or to exchange both functions.
- The combination of the Bracket of the invention with labio-lingual way of threading the wire or vice versa, from lingual to labial and between one tooth and another underneath the contact point, creates an opening tensional action aligned to the occlusal plane and perpendicular to the resistance of the adjacent teeth, creating the mesiodistal space exactly where it is needed, being one of the differences with the other prior art techniques.
- Because the common brackets in the market have slots with flat surfaces that form straight angles where they make contact with the wire, and the Bracket of the invention has three slots and two auxiliary notches with rounded surfaces where it makes contact with the wire in order to regulate the height, and the common brackets or buttons do not work when regulating the height of the wire threading.
- In order to place the Bracket one needs to know the interdental and labiolingual wire threading alignment procedure, the interdental wire eyeleting or the interdental wiring in order to achieve the necessary correction of the teeth, know where and in which tooth they can be installed and the function achieved when you pass the wire interdentally or combined with the Bracket of the invention, in order to allow the action for opening of the spaces on both sides of the tooth in bad position.
- With the Bracket of the invention, unnecessary extractions are not done to the patient because the tension exerted allows the formation of bone and the formation or opening of the space. Tension is only exerted on the affected area without causing the malformation of other dental pieces.

### BRIEF DESCRIPTION OF THE PICTURES

Figure 1 is a frontal view of the Bracket of the invention where the following is shown: the two winglets (1), the central slot (2), the occlusal slot (3), the gingival slot (4), the rounded surfaces (5), the secondary notch for extrusion (6) and the secondary notch for intrusion (7).

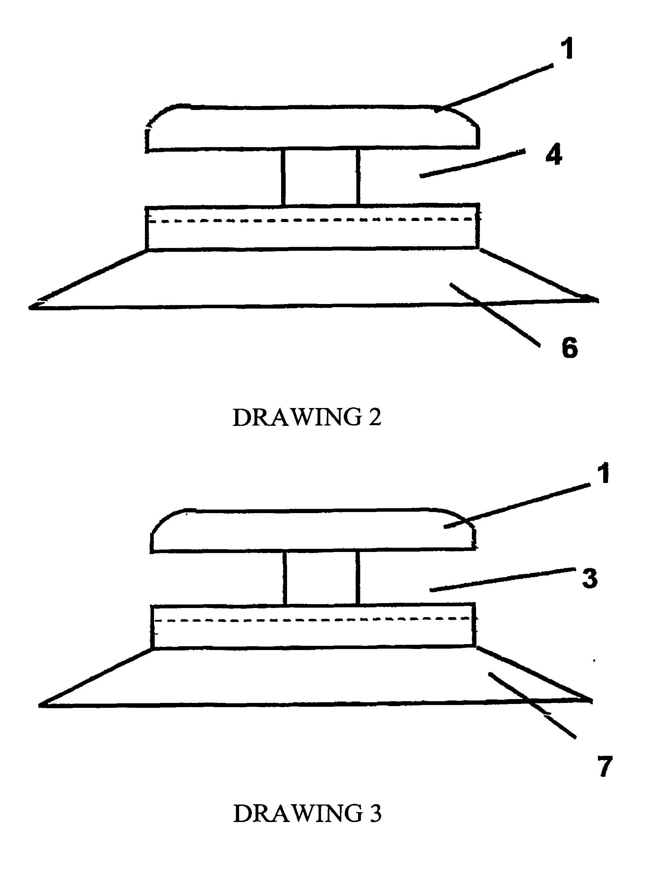

On Figure 2 you see the right lateral view of the Bracket of the invention where the following is shown: the two winglets (1), the gingival slot (4) and the secondary notch for extrusion (6).
Figure 3 is the left lateral view of the Bracket of the invention where the following is shown: the two winglets (1), the gingival slot (4) and the secondary notch for intrusion (7).
Figure 4 is a set of pictures of the bucal cavity where the location of the Bracket of the invention is shown, as well as the wire threading alignment procedure and the tension exerted by the wire on both sides of the tooth in bad position.
Figure 5 is a superior view of a set of teeth that shows the tooth in bad position with the Bracket of the invention with wire threading and the tension exerted between the teeth.
Figure 6 shows a superior view of a set of teeth with a tooth with the Bracket of the invention with wire threading and the tension exerted on the tooth in bad position, opening the spaces between the remaining teeth.
Figure 7 shows a superior view of a set of teeth with a tooth with the Bracket of the invention with wire threading and the tension exerted on the tooth in bad position, entering between the other teeth.
Figure 8 shows a superior view of a set of teeth with a tooth with the Bracket of the invention with wire threading aligned with the other teeth.

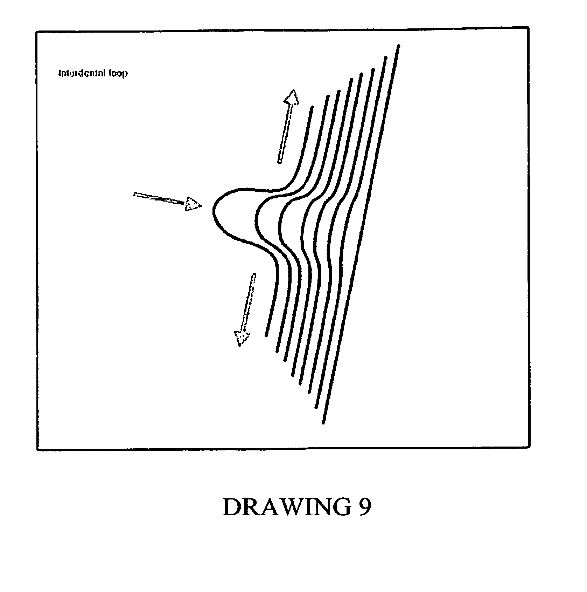

In Figure 9 you can see the behavior of the wire tension forming senoidal waves.

### DESCRIPTION OF THE INVENTION

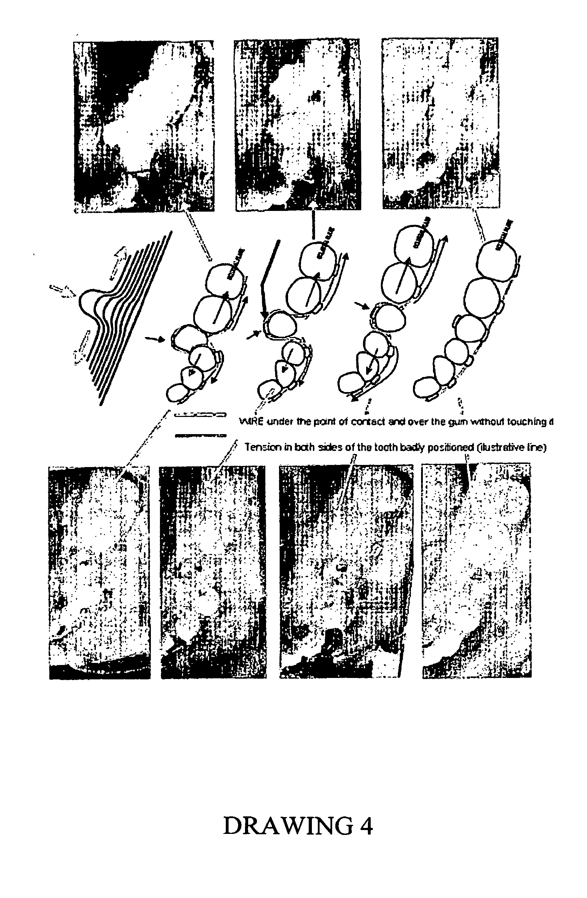

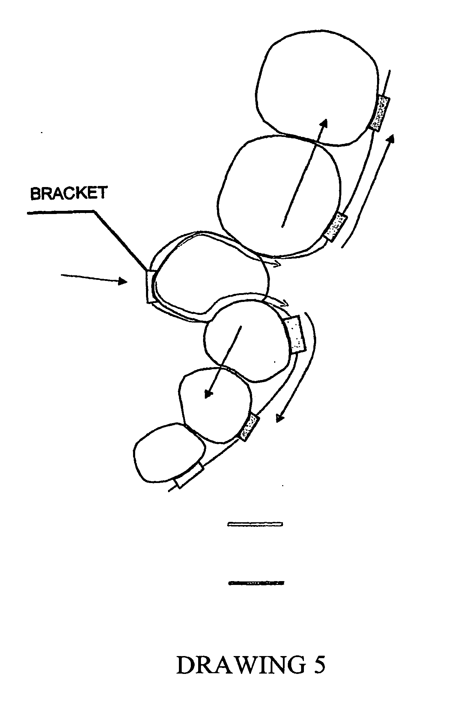

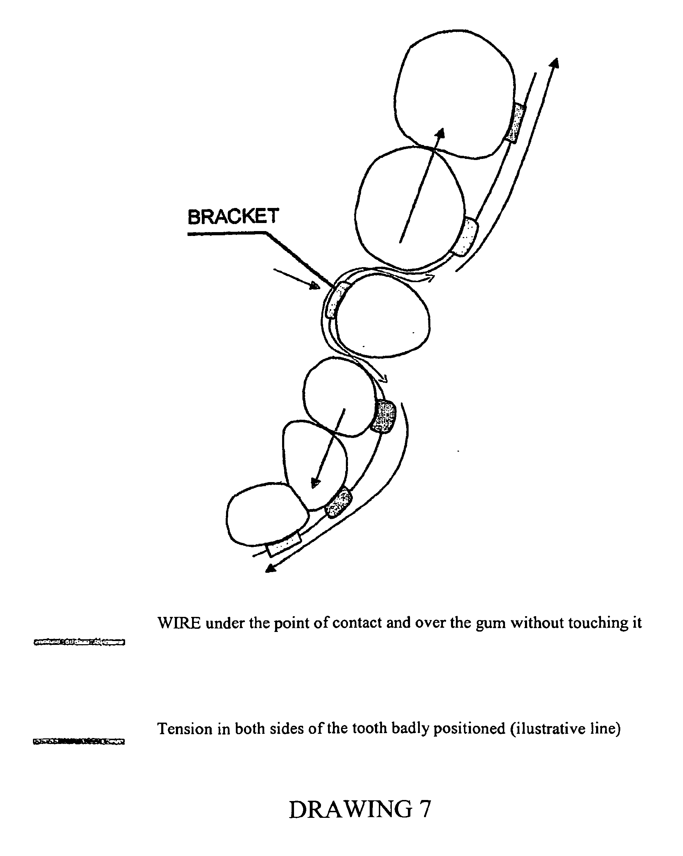

The patent request for the combination of a Bracket and the interdental wire threading alignment procedure comprises the use of:
A. One or several Brackets of the invention that are placed always on the opposite side of the technique used on the crowded or unaligned tooth.
B. A single wire threaded that is grabbed by the brackets, the wire is eyeleted between the crowded dental pieces underneath the contact point (free natural space between the contact point and the gum), using the interdental labio-lingual threading technique or vice¬versa, in a way that an opening tension is produced on both sides of the tooth in bad position, giving a better cosmetic bucofacial appearance.
C. The joint interaction or the use of the bracket of the invention combined with the interdental wire threading allows several functions depending on its variations such as: open the spaces on both sides of the crowded tooth, extrude, intrude, direct or redirect the movement action of the bad positioned tooth in addition to the common uses of the crossed and rotational elastics, as shown in Figures 4, 5, 6, and 7.

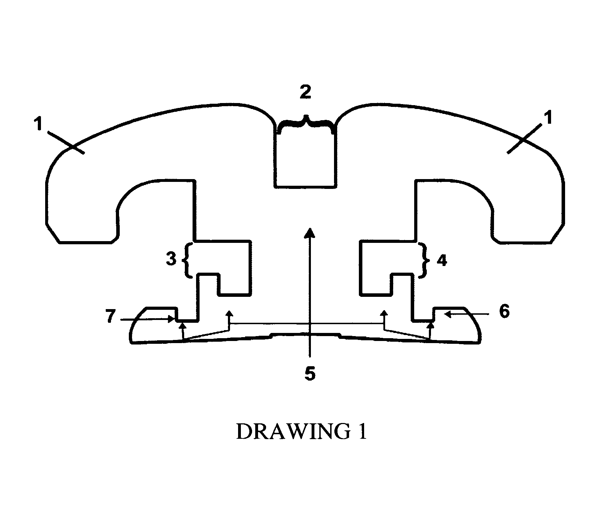

The Bracket of the invention as shown in Figure 1 is comprised by: two winglets (1), a central slot (2), two external slots in an inverted L shape or downwards, one towards the bite or occlusal slot (3) and the other towards the gum or gingival slot (4). These slots are placed on the base and body of the Bracket that allow retaining or auto-attach the wire in an effective way due to its rounded surface (5) where it makes contact with the wire. In addition, due to its inverted "L" shape and to the opposite position in relation with the other brackets of the tooth in good position, designed for the same purpose, which also works for regulating the height of the wire and in this way compensate the interferences of the Bracket of the invention with the occlusion or dental papilla, depending on what we wish to achieve or to compensate the height of the wire threading, besides opening the spaces on both sides of the tooth in bad position.

Besides, the Bracket has a secondary notch for extrusion (6) a secondary notch for intrusion (7) placed on the base of the Bracket and with a rounded surface where it makes contact with the wire, allowing a better retention or an additional auto-attach in case it is required.

Buttons used in orthodontics never have winglets, slots or holes. Also, buttons cannot function to open spaces with any orthodontic mechanism, procedure or techniques, neither they are used to engage or interdentally thread the wires or the main arch or in combination with the wire threading alignment procedure. Common buttons only work in the correction of rotations and in the use of crossed elastics, and they do not allow to thread the wire with the wire threading alignment procedure in order to use them in the alignment of any other type of malocclusions. The known brackets are never used on the opposite side; they are used always on the same side of the technique being used.

When the wire interferes with the gum, height of the wire threading can be adjusted using the external slots with an inverted or downwards L shape. For example, when the ¬bracket of the invention may interfere with the occlusion, these may be placed towards the root or cervical and the wire threading may be compensated moving it towards the occlusal to eyelet in the vertex of me Interdental papilla. In addition, the different levels of these slots also allow us to extrude (elevate) the bad positioned tooth in cases of severe deep bites or intrude (lower or depress) in cases of collapsed or crowded lower premolars. At the same time when tire spaces en both sides of the collapsed or crowded premolars are opened, they may be intruded according to the levels of the slots of me ¬Bracket of the invention where the wire threading is done.

All tire slots have rounded surfaces en the mesiodistal direction (horizontal) where the make contact with the wire, allowing the auto-retention and also the sliding of the wire, reducing the friction, in order to open me spaces with tension on both sides of the crowded tooth due to the way the wire is threaded from the outside no the inside and then back to the initial side. When the Interdental spaces are opened, the dental pieces are automatically leveled in a vertical direction which may facilitate the opening of deep bites.

The Bracket of the invention, for the lingual technique may be made from porcelain or plastic, and for the conventional technique, of metal, although both may be exchanged for any of the purposes. This applies when you wish a better esthetical requirement.

In the conventional technique, the brackets are placed in front of the teeth in good position and the bracket of the invention in the back (lingually) of the crowded or bad positioned tooth.

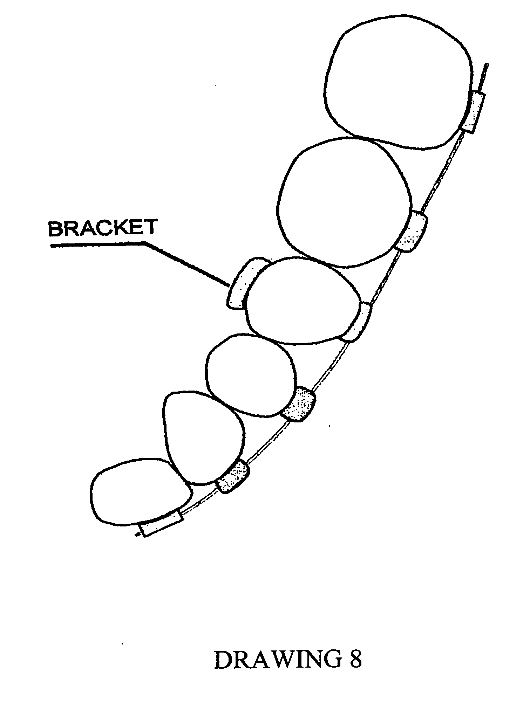

The wire threading alignment procedure that uses the ¬Bracket of the invention consists in passing the wire in front of the teeth in good position (labial side anchored by the bracket) and then through the back of the bad positioned teeth (lingual side), hooked with the Bracket of the invention, passing it again in front (labial side) of the next tooth in good position. This threading mechanism creates an opening tension, specifically on both sides of the bad positioned tooth, stimulating the formation of alveolar bone (mesiodistal orthodontic dento¬alveolar distraction), creating the space needed on both sides of the crowded tooth and also in a vertical direction before aligning it. (See figures 4- 5, 6, 7 and 8)¬

We thread the wire (0.14 nitinol wire) from labial to lingual passing it under the contact point (area where the adjacent teeth meet with the free natural space between the contact point and the gum) and over the dental papilla (gum between one tooth and another). In this way, the crowded or bad positioned tooth will be surrounded by the wire, creating a light and constant tension on both sides of the crowded tooth, which is biologically better accepted by the tissues.

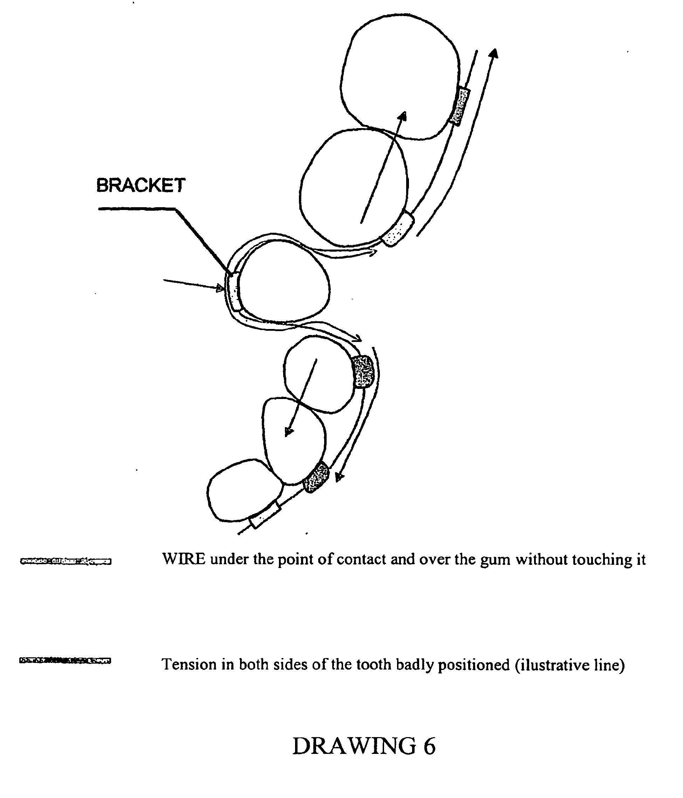

When the wire surrounds the bad positioned tooth on both sides (mesially and distally), a senoidal wave in en interdental loop shape is formed, creating a tensional opening action on both sides of the tooth in bad position (mesiodistal instead of a pressure action against the crowded tooth. (See Figure 6).

With the procedure of the present invention, the spaces may be created in several interdental zones in a localized way and at the same time, to then move the crowded tooth towards the spaces created in a mesiodistal way (both sides of the affected tooth) as well as in a vertical one, extruding the tooth to align deep bites or intruding (deepening) the tooth in cases of extruded or collapsed dental pieces. This allows aligning, placing and leveling the bad positioned tooth in a labio-lingual mesiodistal and vertical direction. The clear difference of this Interdental wire threading mechanic is that the wire acts as an interdental tensional spring (interdental loop that applies tension on both sides of the overlapped or bad positioned tooth, creating the space before aligning the tooth, while the other procedures apply pressure using springs or tangential arches (tied or anchored to the labial or external side of the bad positioned tooth) and not between one tooth and another, nor perpendicularly centered to the resistance of the adjacent teeth; in this way, a fluctuant pressure that decreases is applied, until the point that it is necessary to reactivate the springs or arches again, situation that produces discomforts and affects the response of the tissues. On the contrary, with the Interdental wire threading alignment procedure, an opening action of the spaces is achieved by means of a constant tension when the wire tries to return to its original position, resilience property aligned to the occlusal plane and perpendicular to the resistance of the adjacent teeth, exactly where the space is needed, aligning the bad positioned tooth in a mesiodistal (both sides) direction and in a vertical (up and down) and labio-lingual (back and forth) one, since the spaces are created.

The wire threading alignment procedure may be combined with the lingual technique, where only the known brackets are placed lingually and the bracket of the invention is placed in front or en the labial side of the bad positioned tooth in order to also produce a space opening tension effect because an interdental loop is formed.

Finally, we can establish that with the wire threading alignment procedure the need of dental extractions is highly reduced, decreasing risk factors and limitations in certain types of mal occlusions, for example, in patients with concave or deep profiles where we may negatively affect the profile, the periodontal tissues, the oclusion and the temporo-mandibular articulation when inadequate extractions that may be avoided by opening localized spaces on both sides of the bad positioned tooth are done.

The wire threading alignment procedure creates space between the teeth where it is exactly needed, facilitating the treatment, reducing risk factors and treatment time.

The Bracket of the invention in combination with the Interdental wire threading alignment procedure produces new functions and effects since it fulfils the following purposes: when they are placed on the bad positioned tooth on the opposite side of the conventional technique used, combined with the interdental wire threading on both sides of the tooth in bad position (labio-lingual or vice-versa), a totally different function and effect is exerted for the opening of the spaces in both sides of the bad positioned tooth; in addition, it has other additional functions combined at the same time, as for example: the use of controlled crossed elastics in order to direct, redirect or counter-arrest the tensional action and the placing of rotational elastics at the end because the Bracket of the invention when used in combination with wire threading alignment procedure has slots with rounded surfaces and wings that the known regular buttons used in orthodontics do not have. This is why the buttons available in the market alone cannot function in combination with Interdental wire threading alignment procedure.

## Claims

1. Orthodontic bracket comprising two winglets (1) forming a central slot (2) for passing an interdental wire threading, comprising:
- a secondary notch for extrusion (6) and a secondary notch for intrusion (7) located on the base of the bracket, comprising a rounded surface for making contact with an interdental wire threading;
**characterised in that** it further comprises:
- a bite or occlusal slot (3) and a gum or gingival slot (4) with inverted or downwards "L" form, wherein said slots (3,4) are located between the base and the body of the bracket and comprise a rounded surface (5) for making contact with an interdental wire threading and with an inverted "L" form to regulate the height of the wire threading and to open the spaces on both sides of the tooth in bad position.

2. Orthodontic bracket according to claim 1 in combination with an interdental wire threading wherein any of the central slot (2), the bite or occlusal slot (3), the gum or gingival slot (4), the secondary notch for extrusion (6) or the secondary notch for intrusion (7) is configured to allow pass of the interdental wire threading.

3. Orthodontic bracket according to claim 1 in combination with an interdental wire threading wherein any of the bite or occlusal slot (3), or the gum or gingival slot (4) is configured to allow pass of the interdental wire threading **for use** as a means for compensating the height of the wire threading in orthodontic therapy.

4. Orthodontic bracket according to claim 1 in combination with an interdental wire threading wherein any of the secondary notch for extrusion (6) or the secondary notch for intrusion (7) is configured to allow pass of the interdental wire threading **for use** as a means for tooth intrusion or extrusion in orthodontic therapy.

## Patentansprüche

1. Bracket für kieferorthopädische Behandlungen mit zwei Flügeln (1), die ein mittleres Schloss (2) bilden, um einen zwischen den Zähnen verlaufenden Drahtbogen durchzuführen, umfassend:
- einen sekundären Einschnitt zur Extrusion (6) und einen sekundären Einschnitt zur Intrusion (7), die sich jeweils an der Basis des Brackets befinden und die eine abgerundete Oberfläche umfassen, die gegen einen zwischen den Zähnen verlaufenden Drahtbogen anliegt;
**dadurch gekennzeichnet, dass** es zusätzlich folgendes umfasst:
- einen Okklusalaufbiss bzw. ein okklusales Schloss (3) und ein Schloss am Zahnfleisch bzw. ein gingivales Schloss (4) in Form eines umgekehrten bzw. nach unten gerichteten "L"s, wobei die genannten Schlösser (3, 4) zwischen der Basis und dem Körper des Brackets liegen und eine abgerundete Oberfläche (5) umfassen, die gegen einen zwischen den Zähnen verlaufenden Drahtbogen anliegt und die Form eines umkehrten "L" aufweist, um die Höhe des durchgeführten Drahtbogens zu regeln und Platz auf beiden Seiten des Zahns mit der Fehlstellung zu schaffen.

2. Bracket für kieferorthopädische Behandlungen nach Anspruch 1, in Kombination mit einem zwischen den Zähnen verlaufenden Drahtbogen, bei dem beliebig das mittlere Schloss (2), der Okklusalaufbiss bzw. das okklusale Schloss (3), das am Zahnfleisch liegende bzw. gingivale Schloss (4), der sekundäre Einschnitt zur Extrusion (6) und der sekundäre Einschnitt zur Intrusion (7) so gestaltet ist, dass es das Durchführen des zwischen den Zähnen verlaufenden Drahtbogens ermöglicht.

3. Bracket für kieferorthopädische Behandlungen nach Anspruch 1, in Kombination mit einem zwischen den Zähnen verlaufenden Draht, bei dem beliebig der Okklusalaufbiss bzw. das okklusale Schloss (3) oder das am Zahnfleisch liegende bzw. gingivale Schloss (4) so gestaltet ist, dass er/es das Durchführen des zwischen den Zähnen verlaufenden Drahtbogens ermöglicht, damit dieser als Mittel zum Höhenausgleich des durchgeführten Drahtbogens bei der kieferorthopädischen Behandlung genutzt werden kann.

4. Bracket für kieferorthopädische Behandlungen nach Anspruch 1, in Kombination mit einem zwischen den Zähnen verlaufenden Drahtbogen, bei dem beliebig der sekundäre Einschnitt zur Extrusion (6) oder der sekundäre Einschnitt zur Intrusion (7) so gestaltet ist, dass er das Durchführen des zwischen den Zähnen verlaufenden Drahtbogens ermöglicht, damit dieser als Mittel für die Intrusion (Verkürzung) oder Extrusion (Verlängerung) von Zähnen bei der kieferorthopädischen Behandlung genutzt werden kann.

## Revendications

1. Bracket orthodontique comprenant deux ailettes (1) formant une rainure centrale (2) afin de passer un tissu en fil interdentaire, qui comprend:
- une entaille secondaire d'extrusion (6) et une entaille secondaire d'intrusion (7) situées sur la base du bracket, qui comprennent une surface arrondie pour rentrer en contact avec un tissu en fil interdentaire;
**Caractérisé en ce qu'il comprend,** en outre:
- un mordu ou rainure occlusale (3) et une gencive ou rainure gingivale (4) sous forme de "L" inversé ou vers le bas, dans lequel ces rainures (3, 4) sont situées entre la base et le corps du bracket et comprennent une surface arrondie (5) qui rentre en contact avec un tissu en fil interdentaire, sous forme de "L" inversé afin de régler la hauteur du tissu du fil et d'ouvrir des espaces sur les deux côtés de la dent mal située.

2. Bracket orthodontique selon la revendication 1, combiné à un tissu en fil interdentaire dans lequel aussi bien la rainure centrale (2), que le mordu ou rainure occlusale (3), la gencive ou rainure gingivale (4), l'entaille secondaire d'extrusion (6) ou l'entaille secondaire d'intrusion (7) permettent le passage du tissu en fil interdentaire.

3. Bracket orthodontique selon la revendication 1, combiné à un tissu en fil interdentaire dans lequel aussi bien le mordu ou rainure occlusale (3), que la gencive ou rainure gingivale (4) permettent le passage du tissu en fil interdentaire afin d'être utilisés comme un moyen pour compenser la hauteur du tissu en fil dans le cadre de la thérapie orthodontique.

4. Bracket orthodontique selon la revendication 1, combiné à un tissu en fil interdentaire dans lequel aussi bien l'entaille secondaire d'extrusion (6) que l'entaille secondaire d'intrusion (7) permettent le passage du tissu en fil interdentaire afin d'être utilisé comme moyen d'intrusion ou d'extrusion dentaire dans le cadre de la thérapie orthodontique.
